# FASCICULE DE BREVET EUROPEEN

(11) **EP 2 185 852 B1**
(45) Date de publication et mention de la délivrance du brevet: **25.06.2014**
(21) Numéro de dépôt: 08836489.8
(22) Date de dépôt: 01.09.2008
(51) Int. Cl.: F16L 21/08, F16L 21/00

(54) **ENSEMBLE POUR COLLIER À GRIFFES, COLLIER ET LIAISON TUBULAIRE CORRESPONDANTS**
GRIFFROSETTENANORDNUNG, ENTSPRECHENDE GRIFFROSETTE UND RÖHRENVERBINDUNG
GRIP COLLAR ASSEMBLY, CORRESPONDING COLLAR AND TUBE JOINT

(30) Priorité: 05.09.2007 FR 0757362
(43) Date de publication de la demande: 19.05.2010
(73) Titulaire: Saint-Gobain PAM, 54000 Nancy (FR)
(72) Inventeur: FRANCOIS-BRAZIER, Joël, F-54700 Pont-a-Mousson (FR); RENARD, Serge, F-54700 Montauville (FR)
(74) Mandataire: Jacobson, Claude
(86) Numéro de dépôt international: PCT/FR2008/051551
(87) Numéro de publication internationale: WO 2009/044024

(56) Documents cités:
- EP-A- 1 245 889
- EP-A- 1 568 930
- DE-A1- 2 609 576
- DE-C1- 3 710 852

## Description

La présente invention concerne un ensemble pour collier à griffes, du type comprenant
- un corps de base s'étendant autour d'un axe central, et
- un segment à griffes s'étendant autour de l'axe central sur une plage inférieure à 180°, le segment à griffes étant fixé au corps de base par des moyens de fixation.

On connaît du document EP-A-1,245,889 un tel collier à griffes comprenant un corps de base ou une ceinture et un segment à griffes. Le segment à griffes est fixé au corps de base au moyen de portions découpées du corps de base et déformées plastiquement.

Ces moyens de fixation nécessitent des opérations de découpe et de pliage complexes et conduisent à un coût élevé du collier à griffes.

L'invention a pour but d'indiquer un ensemble pour collier à griffes qui soit économique à fabriquer.

A cet effet, l'invention a pour objet un ensemble du type indiqué ci-dessus, caractérisé en ce que les moyens de fixation comprennent des moyens de fixation par encliquetage.

Selon des modes particuliers de réalisation, l'ensemble selon l'invention comporte l'une ou plusieurs des caractéristiques suivantes :
- les moyens de fixation sont constitués par les moyens de fixation par encliquetage ;.
- les moyens de fixation par encliquetage comprennent au moins :
   ➢ une première saillie disposée sur soit le segment à griffes soit le corps de base, et
   ➢ un premier orifice aménagé respectivement dans soit le corps de base soit le segment à griffes,
   ➢ et la première saillie est adaptée pour s'engager dans le premier orifice par encliquetage ;
- les moyens de fixation par encliquetage comprennent:
   ➢ une deuxième saillie disposée sur soit le segment à griffes soit le corps de base, et
   ➢ un deuxième orifice aménagé respectivement dans soit le corps de base soit le segment à griffes,
   > et la deuxième saillie est adaptée pour s'engager dans le deuxième orifice par encliquetage ;
      - le segment à griffes comprend deux extrémités circonférentielles séparées par une partie courante, et la ou chaque saillie est disposée sur l'une des extrémités circonférentielles et fait saillie de l'extrémité circonférentielle selon une direction sensiblement radiale et/ou axiale par rapport à l'axe central ;
      - les moyens de fixation par encliquetage sont adaptés pour permettre l'encliquetage par une déformation élastique de la partie courante du segment à griffes ;
      - les moyens de fixation par encliquetage sont venus de matière avec le corps de base et/ou le segment à griffes ;
      - le segment à griffes comporte un bord radialement intérieur par rapport à l'axe central, le bord radialement intérieur étant muni de griffes, et le bord radialement intérieur comporte au moins une portion de préhension démunie de griffes ;
      - la ou chaque portion de préhension est disposée sur l'une des extrémités circonférentielles ; et
      - chacune des griffes comporte une surface de griffe parallèle à un plan perpendiculaire à l'axe central, les surfaces de griffe étant coplanaires.

L'invention a également pour objet un collier à griffes, du type comprenant au moins un ensemble muni d'un corps de base et d'un segment à griffes, caractérisé en ce qu'au moins l'un des ensembles est un ensemble tel que défini ci-dessus.

En outre, l'invention a pour objet une liaison tubulaire, du type comportant :
- deux bouts unis ;
- un joint d'étanchéité ; et
- un collier à griffes, caractérisé en ce que le collier à griffes est un collier à griffes tel que défini ci-dessus.

L'invention sera mieux comprise à la lecture de la description qui va suivre, donnée uniquement à titre d'exemple et faite en se référant aux dessins annexés, sur lesquels :
- La figure 1 est une vue en coupe selon un plan radial d'une liaison tubulaire selon l'invention
- La figure 2 est une vue en perspective d'un collier à griffes selon l'invention ;
- la figure 3 est une vue en coupe selon un plan radial du collier à griffes de la figure 2 ;
- la figure 4 est une vue en perspective d'une partie d'un ensemble pour collier à griffes, comportant un corps de base et un seul segment à griffes, le segment à griffes étant fixé au corps de base ; et
- la figure 5 est une vue de l'ensemble de la figure 4, le segment à griffes étant détaché du corps de base.

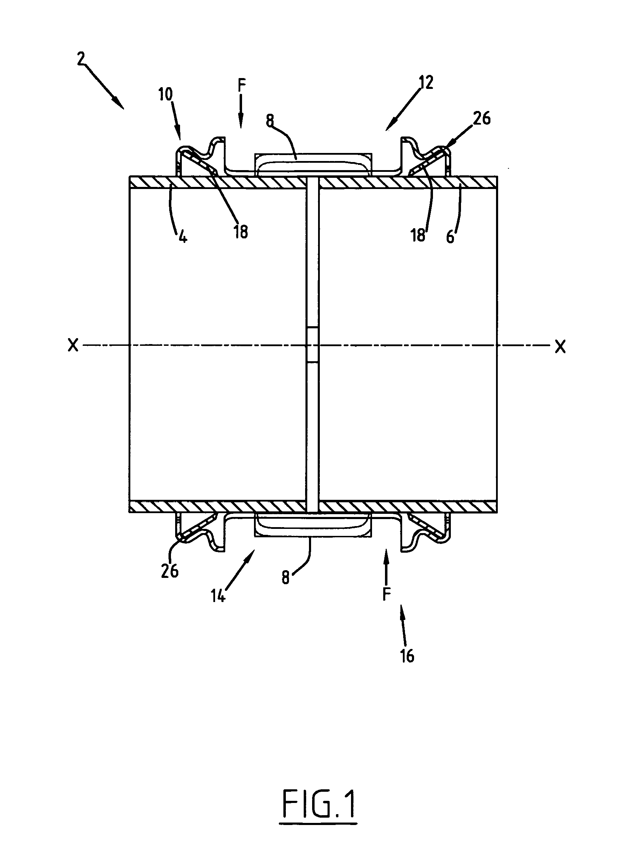

En se référant tout d'abord à la figure 1, celle-ci montre en coupe selon un plan radial une liaison tubulaire selon l'invention, désignée par la référence générale 2.

La liaison tubulaire 2 comporte deux bouts unis 4,6 chacun formé par une extrémité d'un tuyau, un joint d'étanchéité 8 reliant de manière étanche le bout uni 4 au bout uni 6 et un collier à griffes 10.

Les bouts unis 4,6 sont fabriqués soit en métal, tel que de la fonte, soit en matière plastique, telle que du polyéthylène.

Le joint d'étanchéité 8 est d'un type connu en soi et sert à relier de manière étanche les deux bouts unis 4,6. Le joint d'étanchéité 8 comporte un anneau ayant au minimum deux lèvres d'étanchéité, un collier de serrage entourant l'anneau, ainsi que des moyens de serrage du collier de serrage.

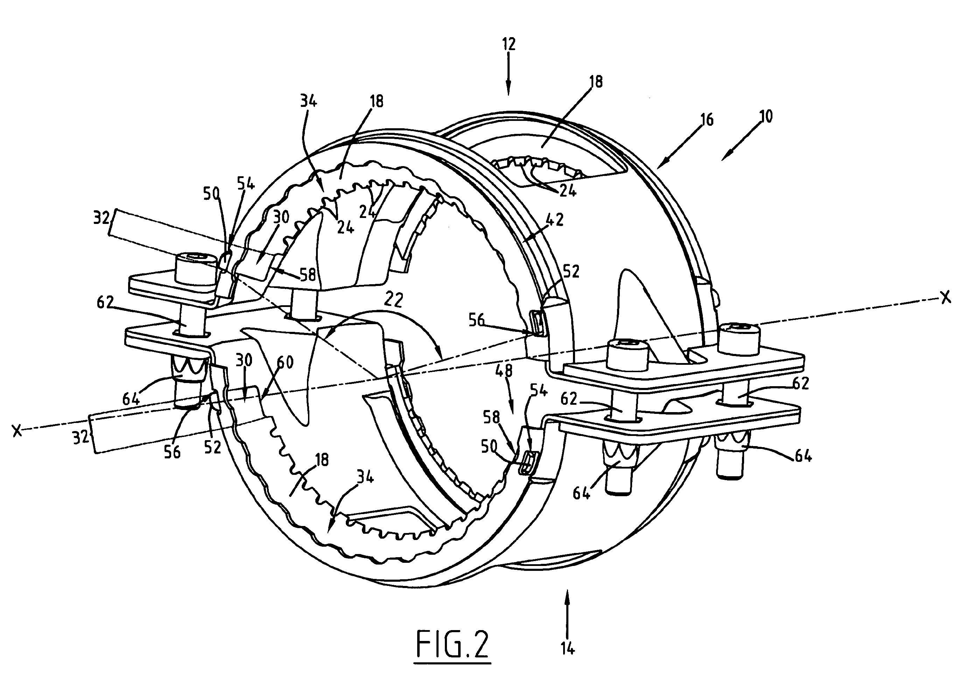

Le collier à griffes 10 est représenté plus en détail sur la figure 2. Le collier à griffes 10 est adapté pour verrouiller les deux bouts unis 4,6 l'un par rapport à l'autre et pour empêcher une séparation axiale des deux bouts unis 4,6 lorsqu'un fluide sous pression se situe dans ceux-ci.

Le collier à griffes 10 s'étend autour d'un axe central X-X, qui est l'axe central de la liaison tubulaire 2. Dans ce qui suit, les expressions « axialement », « radialement » et « circonférentiellement » seront utilisées par rapport à cet axe central X-X.

Le collier à griffes 10 comporte un premier ensemble 12 et un deuxième ensemble 14. Le premier ensemble 12 et le deuxième ensemble 14 sont pour l'essentiel identiques. En conséquence, dans ce qui suit seul le premier ensemble 12 sera décrit.

L'ensemble 12 pour collier à griffes comprend un corps de base 16 ou demicage s'étendant autour de l'axe central X-X.

Le corps de base 16 comporte une fenêtre F pour le passage de moyens de serrage du joint d'étanchéité 8.

L'ensemble 12 est en outre muni de deux segments à griffes 18 dont un est disposé à chaque côté axial du corps de base 16.

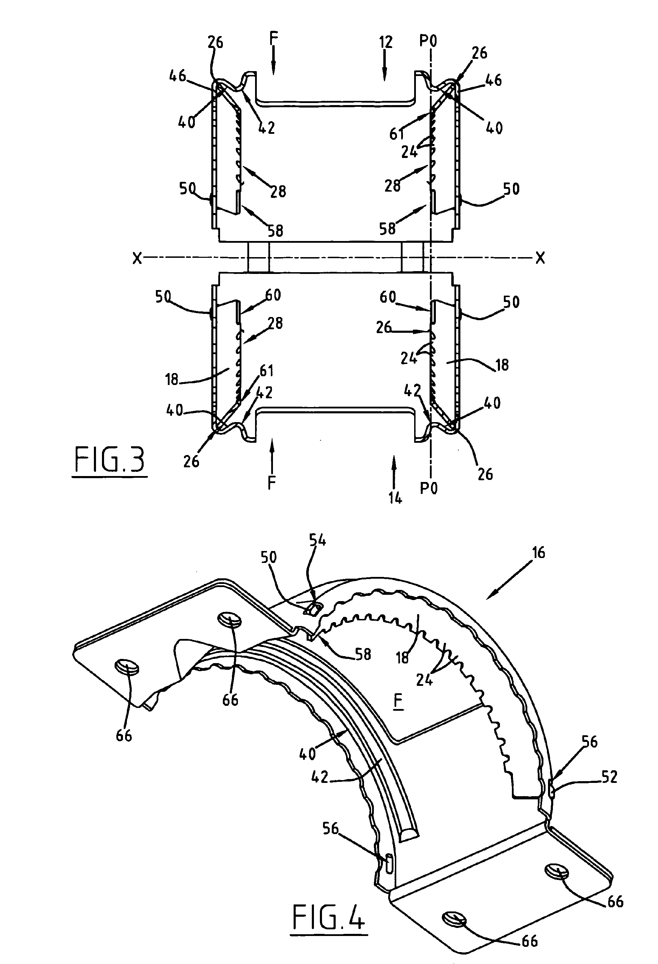

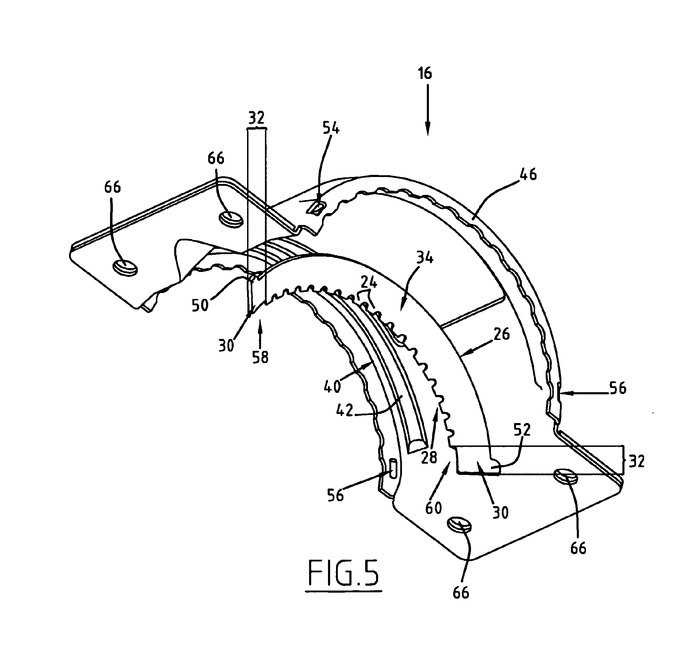

Le segment à griffes 18 s'étend autour de l'axe central X-X autour d'une première plage angulaire 22. Le segment à griffes 18 est muni sur sa partie radialement intérieure de griffes 24 adaptées pour s'accrocher sur la surface extérieure d'un des bouts unis 4,6. Le segment à griffes 18 a une forme générale de tronc de cône partiel et délimite un bord radialement extérieur 26 lisse ainsi qu'un bord radialement intérieur 28 portant les griffes 24 (voir figures 4 et 5). Comme ceci est visible sur la figure 3, les deux bords intérieurs 28 des segments 18 de l'ensemble 12 sont dirigés axialement l'un vers l'autre.

En se référant de nouveau à la figure 1, le segment à griffes 18 comprend deux extrémités circonférentielles 30. Chaque extrémité circonférentielle 30 s'étend sur une deuxième plage angulaire 32 qui correspond à une valeur comprise entre 3% et 10% de la première plage angulaire 22. Le segment à griffes 18 a en outre une partie courante 34 délimitée de part et d'autre par les deux extrémités circonférentielles 30.

Le segment à griffes 18 est fabriqué et est traité de manière à obtenir une dureté superficielle des griffes supérieure à celle de la matière des bouts unis 4,6. Le segment est par exemple fabriqué en acier.

L'ensemble pour collier à griffes 12 est en outre muni de moyens de butée 40 (voir figure 3) adaptés pour limiter une déformation du segment à griffes 18 en torsion suivant un axe perpendiculaire à un plan radial. Plus particulièrement, les moyens de butée 40 sont adaptés pour bloquer la torsion de la partie courante 34 lors du serrage du collier à griffes 10 sur les bouts unis 4,6. Ces moyens de butée 40 comprennent une nervure 42 (voir figures 3, 4 et 5) disposée sur le corps de base 16 et ouverte radialement vers l'extérieur.

Le corps de base 16 comporte une paroi frontale 46. Le segment à griffes 18 est inséré entre la nervure 42 et cette paroi frontale 46. A un état non monté de l'ensemble 12, la partie courante 34 du segment à griffes 18 et la nervure 42 délimitent un jeu axial entre eux, permettant un déplacement axial limité de la partie courante 34 par rapport au corps de base 16.

L'ensemble 12 comporte en outre des moyens de fixation 48 du segment à griffes 18 au corps de base 16. Ces moyens de fixation 48 comprennent, et de préférence sont constitués par, des moyens de fixation par encliquetage.

Les moyens de fixation 48 comprennent une première 50 et une deuxième 52 saillies disposées sur le segment à griffes 18.

Chacune des première 50 et deuxième 52 saillies est disposée sur l'une des extrémités circonférentielles 30 du segment à griffes 18. L'inclinaison de chaque saillie 50, 52 par rapport à l'axe X-X est de préférence identique à l'inclinaison de la partie courante 34 et des extrémités circonférentielles 30 du segment à griffes. En d'autres termes, les saillies 50 et 52 font saillie de l'extrémité circonférentielle selon une direction radiale et axiale par rapport à l'axe central.

Les saillies 50, 52 sont de préférence venues de matière avec les extrémités circonférentielles 30.

Les moyens de fixation 48 comprennent en outre un premier 54 et un deuxième 56 orifices ménagés dans le corps de base 16. Les orifices 54, 56 sont des orifices traversants. Ils sont par exemple fabriqués par découpe ou poinçonnage de la paroi du corps de base 16.

La première 50 et la deuxième 52 saillies, ainsi que les premier 54 et deuxième 56 orifices sont configurés de telle manière que, lorsque le corps de base 16 et le segment à griffes 18 sont à l'état de repos, ils coopèrent par complémentarité de formes et retiennent le segment à griffes 18 à l'intérieur du corps de base 16.

Le segment à griffes 18 est adapté pour être déformé élastiquement dans une configuration dans laquelle la première saillie 50 et la deuxième saillie 52 peuvent être engagées dans les orifices 54,56 ou retirées de ceux-ci. En d'autres termes, les saillies 50,52 peuvent être encliquetées dans les orifices 54,56 par une déformation élastique de la partie courante 34.

Comme ceci est visible sur la figure 4, le bord radialement intérieur 28 du segment à griffes 18 comporte deux portions de préhension 58,60, portions démunies de griffes sur lesquelles il est possible de prendre appui lors de la mise en place du segment 18 dans le corps de base 16. Chacune des portions de préhension 58,60 est disposée sur l'une des extrémités circonférentielles 30. Le bord radialement extérieur 26 comporte, à l'emplacement des portions de préhension 58,60, une section obtuse, notamment arrondie, permettant d'encliqueter les saillies 50,52 dans les orifices 54,56 par un appui du monteur sans que celui-ci se blesse.

En se référant à la figure 3, on voit que chacune des griffes 24 d'un segment 18 comporte une surface de griffe 61 parallèle à un plan d'outil PO perpendiculaire à l'axe central X-X, les surfaces 61 des griffes 24 étant coplanaires. Ainsi, les surfaces de griffe 61 peuvent être fabriquées par une simple opération de meulage ou rectification selon le plan d'outil PO.

Le fait de maintenir le segment à griffes 18 dans le corps de base 16 par encliquetage permet d'assembler ces deux composants rapidement et économiquement, et ce en toute sécurité pour l'opérateur qui effectue cette opération manuellement.

Par ailleurs, la réalisation des deux saillies 50, 52 sur le segment à griffes 18 plutôt que sur le corps de base 16 facilite leur fabrication.

En variante, la première 50 et la deuxième 52 saillies peuvent être des éléments rapportés aux extrémités circonférentielles 30, par exemple par soudage, rivetage ou sertissage.

Egalement en variante, les orifices 54,56 peuvent être disposés sur le segment à griffes 18 et les saillies 50,52 peuvent être disposées sur le corps de base 16. Dans ce cas, les saillies 50, 52 sont par exemple venues de matière avec le corps de base 16. En variante encore, d'autres moyens de fixation par encliquetage sont envisageables.

Le collier à griffes 10 comporte en outre des moyens de serrage du premier ensemble 12 et du deuxième ensemble 14 l'un contre l'autre. Ces moyens de serrage comportent des vis 62 et des écrous 64. De manière avantageuse, tous les écrous 64 sont fixés à l'un des ensembles, dans le cas présent, à l'ensemble 14, tandis que l'autre ensemble, par exemple l'ensemble 12, ne porte aucun écrou, mais comporte des trous 66 ménagés dans chaque corps de base 16 et destinés au passage des vis 62.

On comprend que la fixation par encliquetage du segment à griffes 18 au corps de base 16 rend l'assemblage particulièrement simple.

Dans le cas présent, le collier de serrage 10 comporte exactement deux ensembles 12,14, mais il peut aussi comprendre plus de deux ensembles, par exemple trois, voire quatre ensembles.

## Revendications

1. Ensemble pour collier à griffes, du type comprenant
- un corps de base (16) s'étendant autour d'un axe central (X-X), et
- un segment à griffes (18) s'étendant autour de l'axe central (X-X) sur une plage inférieure à 180°, le segment à griffes (18) étant fixé au corps de base (16) par des moyens de fixation (48), **caractérisé en ce que** les moyens de fixation comprennent des moyens de fixation par encliquetage.

2. Ensemble selon la revendication 1, **caractérisé en ce que** les moyens de fixation sont constitués par les moyens de fixation par encliquetage (48).

3. Ensemble selon la revendication 1 ou 2, **caractérisé en ce que** les moyens de fixation par encliquetage comprennent au moins :
- une première saillie (50) disposée sur soit le segment à griffes (18) soit le corps de base (16), et
- un premier orifice (54) aménagé respectivement dans soit le corps de base (16) soit le segment à griffes (18),
et **en ce que** la première saillie (50) est adaptée pour s'engager dans le premier orifice (54) par encliquetage.

4. Ensemble selon la revendication 3, **caractérisé en ce que** les moyens de fixation par encliquetage comprennent:
- une deuxième saillie (52) disposée sur soit le segment à griffes (18) soit le corps de base (16), et
- un deuxième orifice (56) aménagé respectivement dans soit le corps de base (16) soit le segment à griffes (18),
et **en ce que** la deuxième saillie (52) est adaptée pour s'engager dans le deuxième orifice (56) par encliquetage.

5. Ensemble selon la revendication 3 ou 4, **caractérisé en ce que** le segment à griffes (18) comprend deux extrémités circonférentielles (30) séparées par une partie courante (34), et **en ce que** la ou chaque saillie (50,52) est disposée sur l'une des extrémités circonférentielles (30) et fait saillie de l'extrémité circonférentielle selon une direction sensiblement radiale et/ou axiale par rapport à l'axe central (X-X).

6. Ensemble selon la revendication 5, **caractérisé en ce que** les moyens de fixation par encliquetage sont adaptés pour permettre l'encliquetage par une déformation élastique de la partie courante (34) du segment à griffes (18).

7. Ensemble selon l'une quelconque des revendications précédentes, **caractérisé en ce que** les moyens de fixation par encliquetage sont venus de matière avec le corps de base (16) et/ou le segment à griffes (18).

8. Ensemble selon l'une quelconque des revendications précédentes, **caractérisé en ce que** le segment à griffes (18) comporte un bord radialement intérieur (26) par rapport à l'axe central (X-X), le bord radialement intérieur étant muni de griffes (24), et **en ce que** le bord radialement intérieur comporte au moins une portion de préhension (58, 60) démunie de griffes.

9. Ensemble selon au moins la revendication 5 et la revendication 8 prises ensemble, **caractérisé en ce que** la ou chaque portion de préhension (58,60) est disposée sur l'une des extrémités circonférentielles (30).

10. Ensemble selon l'une quelconque des revendications précédentes, **caractérisé en ce que** chacune des griffes (24) comporte une surface de griffe (61) parallèle à un plan (PO) perpendiculaire à l'axe central (X-X), les surfaces de griffe (61) étant coplanaires.

11. Collier à griffes, du type comprenant au moins un ensemble muni d'un corps de base et d'un segment à griffes, **caractérisé en ce qu'**au moins l'un des ensembles est un ensemble selon l'une quelconque des revendications précédentes.

12. Liaison tubulaire, du type comportant :
- deux bouts unis (4, 6) ;
- un joint d'étanchéité (8) ; et
- un collier à griffes (10), **caractérisé en ce que** le collier à griffes est un collier à griffes selon la revendication 11.

## Patentansprüche

1. Anordnung für Rohrschelle mit Greifern des Typs, der umfasst:
- einen Basiskörper (16), der um eine Mittelachse (X-X) verläuft, und
- ein Greifersegment (18), das sich um die Mittelachse (X-X) über einen Bereich von weniger als 180° erstreckt, wobei das Greifersegment (18) an dem Basiskörper (16) durch Befestigungsmittel (48) befestigt ist, **dadurch gekennzeichnet, dass** die Befestigungsmittel Mittel zum Befestigen durch Einrasten umfassen.

2. Anordnung nach Anspruch 1, **dadurch gekennzeichnet, dass** die Befestigungsmittel durch die Mittel (48) zum Befestigen durch Einrasten gebildet sind.

3. Anordnung nach Anspruch 1 oder 2, **dadurch gekennzeichnet, dass** die Mittel zum Befestigen durch Einrasten wenigstens umfassen:
- einen ersten Vorsprung (50), der entweder an dem Greifersegment (18) oder an dem Basiskörper (16) angeordnet ist, und
- eine erste Öffnung (54), die in dem jeweils Anderen des Basiskörpers (16) bzw. des Greifersegments (18) ausgebildet ist,
und dass der erste Vorsprung (50) dafür ausgelegt ist, in der ersten Öffnung (54) durch Einrasten in Eingriff zu gelangen.

4. Anordnung nach Anspruch 3, **dadurch gekennzeichnet, dass** die Mittel zum Befestigen durch Einrasten umfassen:
- einen zweiten Vorsprung (52), der entweder an dem Greifersegment (18) oder an dem Basiskörper (16) angeordnet ist, und
- eine zweite Öffnung (56), die in dem jeweils Anderen des Basiskörpers (16) bzw. des Griffsegments (18) ausgebildet ist,
und dass der zweite Vorsprung (52) dafür ausgelegt ist, in der zweiten Öffnung (56) durch Einrasten in Eingriff zu gelangen.

5. Anordnung nach Anspruch 3 oder 4, **dadurch gekennzeichnet, dass** das Greifersegment (18) zwei Enden (30) in Umfangsrichtung aufweist, die durch einen normalen Teil (34) getrennt sind, und dass der oder jeder Vorsprung (50, 52) an einem der Enden (30) in Umfangsrichtung angeordnet ist und von dem Ende in Umfangsrichtung längs einer im Wesentlichen radialen und/oder axialen Richtung in Bezug auf die Mittelachse (X-X) vorsteht.

6. Anordnung nach Anspruch 5, **dadurch gekennzeichnet, dass** die Mittel zum Befestigen durch Einrasten dafür ausgelegt sind, das Einrasten durch eine elastische Verformung des normalen Teils (34) des Greifersegments (18) zu ermöglichen.

7. Anordnung nach einem der vorhergehenden Ansprüche, **dadurch gekennzeichnet, dass** die Mittel zum Befestigen durch Einrasten einteilig mit dem Basiskörper (16) und/oder dem Greifersegment (18) ausgebildet sind.

8. Anordnung nach einem der vorhergehenden Ansprüche, **dadurch gekennzeichnet, dass** das Greifersegment (18) einen inneren radialen Rand (26) in Bezug auf die Mittelachse (X-X) aufweist, wobei der innere radiale Rand mit Greifern (24) versehen ist, und dass der innere radiale Rand wenigstens einen Greifabschnitt (58, 60), der nicht mit Greifern versehen ist, aufweist.

9. Anordnung zumindest nach Anspruch 5 und nach Anspruch 8, **dadurch gekennzeichnet, dass** der oder jeder Greifabschnitt (58, 60) an einem der Enden (30) in Umfangsrichtung angeordnet ist.

10. Anordnung nach einem der vorhergehenden Ansprüche, **dadurch gekennzeichnet, dass** jeder der Greifer (24) eine Greiferoberfläche (61) parallel zu einer Ebene (PO) senkrecht zu der Mittelachse (X-X) aufweist, wobei die Greiferoberflächen (61) koplanar sind.

11. Rohrschelle mit Greifern des Typs, der wenigstens eine Anordnung, die mit einem Basiskörper und einem Greifersegment versehen ist, umfasst, **dadurch gekennzeichnet, dass** wenigstens eine der Anordnungen eine Anordnung nach einem der vorhergehenden Ansprüche ist.

12. Rohrverbindung des Typs, der umfasst:
- zwei ebene Enden (4, 6);
- eine Dichtung (8); und
- eine Rohrschelle (10) mit Greifern, **dadurch gekennzeichnet, dass** die Rohrschelle mit Greifern eine Rohrschelle mit Greifern nach Anspruch 11 ist.

## Claims

1. Assembly for a claw collar, of the type comprising:
- a base member (16) which extends around a centre axis (X-X), and
- a claw segment (18) which extends around the centre axis (X-X) over a range of less than 180°, the claw segment (18) being fixed to the base member (16) by fixing means (48), **characterised in that** the fixing means comprise snap-fit fixing means.

2. Assembly according to claim 1, **characterised in that** the fixing means are constituted by the snap-fit fixing means (48).

3. Assembly according to claim 1 or 2, **characterised in that** the snap-fit fixing means comprise at least:
- a first projection (50) which is arranged either on the claw segment (18) or on the base member (16), and
- a first hole (54) which is formed either in the base member (16) or in the claw segment (18), respectively,
and **in that** the first projection (50) is capable of engaging in the first hole (54) by means of snap-fitting.

4. Assembly according to claim 3, **characterised in that** the snap-fit fixing means comprise:
- a second projection (52) which is arranged either on the claw segment (18) or on the base member (16), and
- a second hole (56) which is formed either in the base member (16) or in the claw segment (18), respectively,
and **in that** the second projection (52) is capable of engaging in the second hole (56) by means of snap-fitting.

5. Assembly according to claim 3 or 4, **characterised in that** the claw segment (18) comprises two circumferential ends (30) which are separated by a main portion (34) and **in that** the or each projection (50, 52) is arranged at one of the circumferential ends (30) and protrudes from the circumferential end in a substantially radial and/or axial direction relative to the centre axis (X-X).

6. Assembly according to claim 5, **characterised in that** the snap-fit fixing means are capable of allowing snap-fitting by means of resilient deformation of the main portion (34) of the claw segment (18).

7. Assembly according to any one of the preceding claims, **characterised in that** the snap-fit fixing means are integral with the base member (16) and/or the claw segment (18).

8. Assembly according to any one of the preceding claims, **characterised in that** the claw segment (18) comprises a radially inner edge (26) relative to the centre axis (X-X), the radially inner edge being provided with teeth (24), and **in that** the radially inner edge comprises at least one holding portion (58, 60) which has no teeth.

9. Assembly according to at least claim 5 and claim 8 taken in combination, **characterised in that** the or each holding portion (58, 60) is arranged at one of the circumferential ends (30).

10. Assembly according to any one of the preceding claims, **characterised in that** each of the teeth (24) comprises a gripping surface (61) which is parallel with a plane (PO) which is perpendicular relative to the centre axis (X-X), the gripping surfaces (61) being coplanar.

11. Claw collar of the type comprising at least one assembly which is provided with a base member and a claw segment, **characterised in that** at least one of the assemblies is an assembly according to any one of the preceding claims.

12. Tubular connection of the type comprising:
- two spigot ends (4, 6);
- a sealing joint (8); and
- a claw collar (10), **characterised in that** the claw collar is a claw collar according to claim 11.
